# EUROPEAN PATENT SPECIFICATION

(11) **EP 1 075 966 B1**
(45) Date of publication and mention of the grant of the patent: **28.05.2003**
(21) Application number: 00116175.1
(22) Date of filing: 02.08.2000
(51) Int. Cl.: B60C 1/00, B60C 15/06, C08L 21/00

(54) **Tire with apex rubber blend**
Reifen mit Apexmischung aus Gummi
Pneumatique avec joint de bourrage de talon formée de caoutchouc

(30) Priority: 11.08.1999 US 148448
(43) Date of publication of application: 14.02.2001
(73) Proprietor: THE GOODYEAR TIRE & RUBBER COMPANY, Akron, Ohio 44316-0001 (US)
(72) Inventor: Thielen, Georges Marcel Victor, 4995 Schouweiler (LU)
(74) Representative: Leitz, Paul

(56) References cited:
- EP-A- 0 197 395
- US-A- 4 421 891
- US-A- 5 023 292

## Description

### Field

This invention relates to a pneumatic tire having an apex in the region of the carcass ply turnup. More specifically, the invention relates to a pneumatic tire having an apex comprised of a rubber blend containing an acrylonitrile rubber and the reaction product of a cashew nut oil modified novolak-type phenolic resin and a methylene donor.

### Background

The term "apex" as used herein refers to the area of the tire in the immediate proximity of the carcass ply turnup. The apex includes a rubber wedge located in the lower sidewall region above the bead and is bonded to and encased by the carcass plies. The apex also includes the area located between the lower sidewall rubber and the axially outer side of the carcass ply turnup.

A tire is a composite of several components each serving a specific and unique function yet all synergistically functioning to produce the desired performance. One important component is the carcass ply. The carcass ply is a continuous layer of rubber-coated parallel cords which extends from bead to bead and functions as a reinforcing element of the tire. The plies are turned up around the bead, thereby locking the bead into the assembly or carcass. The tire is assembled in the green (uncured) state and upon completion is then vulcanized. Unfortunately, prior to vulcanization when steel cord is the reinforcement in the carcass ply, the carcass ply turnup can cause deformation of the components which upon vulcanization results in an unacceptable product. The deformation of the steel cord reinforced carcass ply turnup in the area of the apex is known as "apex creep." Apex creep is a distortion of the apex compound at the steel cord reinforced carcass ply turnup endings without a interfacial separation due to the stresses associated with the steel cord reinforcement in the carcass ply. Conventionally, natural rubber is used as the rubber in the apex area along with additional reinforcement provided by nylon or flexten chippers.

US-A-4 421 891 discloses bead filler rubber composition, consisting essentially of rubber, carbon black, mixture of novolak phenolic resin, etc..

EP-A-0 197 395 discloses reinforced rubber mixture from phenol novolak resin and/or reactive polyphenol, etc..

### Brief Description of the Drawing

The invention will be described by way of example and with reference to the accompanying drawing in which:

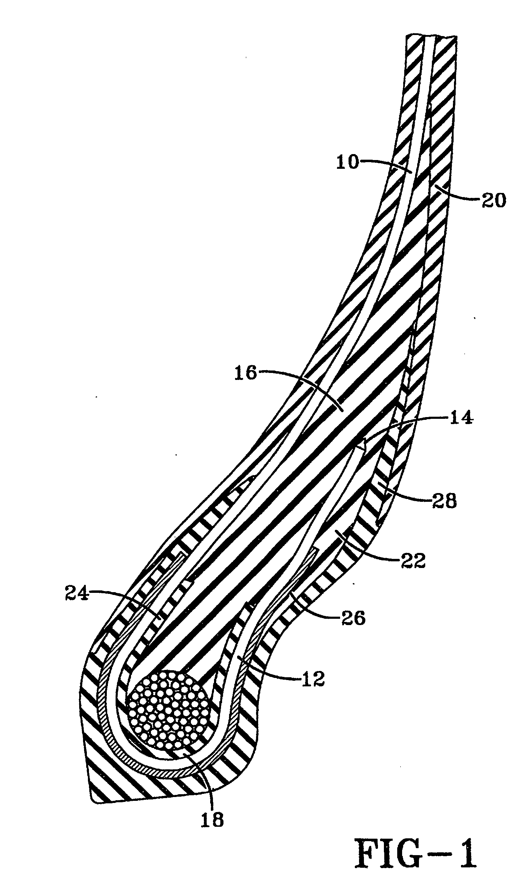

Figure 1 is a partial cross-sectional view of a tire according to the present invention.

### Detailed Disclosure of the Invention

There is disclosed a pneumatic tire having the apex around the carcass ply turnup comprised of a sulfur-vulcanized rubber composition comprising, based on 100 parts by weight of rubber (phr),
(a) 5 to 30 parts by weight of an acrylonitrile-diene rubber having an acrylonitrile content ranging from 15 to 45 percent by weight;
(b) 95 to 70 parts by weight of a rubber selected from the group consisting of medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber and mixtures thereof; and
(c) from 3 to 20 phr of the reaction product of
   (i) from 2 to 15 phr of a cashew nut oil modified novolak-type phenolic resin; and
   (ii) from 1 to 5 phr of a methylene donor selected from the group consisting of hexamethylenetetramine, hexaethoxymethylmelamine, hexamethoxymethylmelamine, lauryloxymethylpyridinium chloride, ethoxymethylpyridinium chloride, trioxan hexamethoxymethylmelamine, the hydroxy groups of which may be esterified or partly esterified and polymers of formaldehyde and N-substituted oxymethyl melamines of the formula: 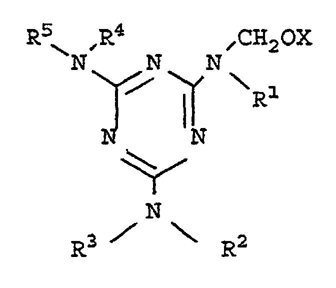
   wherein X is hydrogen or an alkyl having from 1 to 8 carbon atoms, R¹, R², R³, R⁴ and R⁵ are individually selected from the group consisting of hydrogen, an alkyl having from 1 to 8 carbon atoms, the group -CH₂OX and their condensation products.

The present invention relates to a pneumatic tire. Pneumatic tire means a laminated mechanical device of generally toroidal shape (usually an open torus) having beads and a tread and made of rubber, chemicals, fabric and steel or other materials. When mounted on the wheel of a motor vehicle, the tire through its tread provides traction and contains the fluid that sustains the vehicle load. The present invention relates to both bias and radial-ply tires. Preferably, the present invention is a radial-ply tire. Radial-ply tire means a belted or circumferentially-restricted pneumatic tire in which the carcass ply cords which extend from bead to bead are laid at cord angles between 65° and 90° with respect to the equatorial plane of the tire.

A presently preferred embodiment of this invention is shown in Fig. 1. The pneumatic tire contains a single steel cord reinforced carcass ply 10 with a turnup portion 12 and a terminal end 14. Steel cord means one or more of the reinforcement elements, formed by one or more steel filaments/wires which may or may not be twisted or otherwise formed which may further include strands so formed which strands may or may not be also so formed, of which the carcass ply in the tire is comprised. The apex 16 is in the immediate proximity of the carcass ply turnup 14 including the area above the bead 18 and is encased by the carcass ply 10 and carcass ply turnup 12 or sidewall compound 20. The apex also includes the area 22 located between the lower sidewall 20 and the axially outer side of the carcass ply turnup 12. The interface between the bead 18 and the carcass ply 10 is a flipper 24. Located outside of the carcass ply 10 and extending in an essentially parallel relationship to the carcass ply 10 is the chipper 26. Located around the outside of the bead 18 is the chafer 28 to protect the carcass ply 12 from the rim (not shown), distribute flexing above the rim, and seal the tire.

In accordance with this invention, a rubber tire is provided having an apex 16, 22 in the region of the carcass ply turnup 12 wherein said rubber in said apex 16, 22 is the above-described sulfur-cured rubber composition.

One essential component contained in the present invention is an acrylonitrile rubber. Based on 100 parts by weight of the total rubber in the rubber composition, from 5 to 30 parts by weight, is the acrylonitrile rubber. Preferably, from 5 to 20 parts by weight is the acrylonitrile rubber.

The present invention involves the use of an acrylonitrile rubber or acrylonitrile/diene rubber having an acrylonitrile content ranging from 15 to 45 percent by weight. Preferably, the bound acrylonitrile (ACN) content ranges from 24 to 35 percent by weight. The acrylonitrile/diene copolymers are intended to include acrylonitrile/butadiene copolymers such as acrylorictrile - butadiene rubber and acrylonitrile/isoprene copolymers.

Representative examples of commercially available acrylonitrile-butadiene copolymers (followed by the weight percent of bound acrylonitrile) which may be used include Chemigum® N3 (36.5-41.5 ACN), Chemigum® N5 (37.4-42.5 ACN), Chemigum® N6B (30-34 ACN), Chemigum® N7 (28.7-32.8 ACN), Chemigum® N8 (29.7-34.9 ACN), Chemigum® N300 (37.4-42.5 ACN), Chemigum® N318B (37.5-42.5 ACN), Chemigum® N328B (40-43 ACN), Chemigum® N388B (38.9-42 ACN), Chemigum® N608 (31.8-34.9 ACN), Chemigum® N612B (31.8-34.9 ACN), Chemigum® N615B (31.8-34.9 ACN), Chemigum® N624B (30.8-34.9 ACN), Chemigum® N628B (31.8-34.9 ACN), Chemigum® N634 (30.2-34 ACN), Chemigum® N644B (31.8-34.9 ACN), Chemigum® N645B (31.8-34.9 ACN), Chemigum® N685B (31.8-34.9 ACN), Chemigum® N689B (31.8-34.9 ACN), Chemigum® N715B (27.7-30.8 ACN), Chemigum® N917 (21.2-24.3 ACN), Chemigum® N926 (14.4-17.4 ACN), Chemigum® P8B-A (29.7-34.9 ACN), Chemigum® P83 (30.5-33.5 ACN), Chemigum® P90 (30.5-33.5 ACN), Chemigum® P612-A (31.8-34.9 ACN), Chemigum® P615-D (31.8-34.9 ACN) and Chemigum® P608-D (31.8-34.9 ACN). These copolymers are available from The Goodyear Tire & Rubber Company.

In addition to the above conventional acrylonitrile-diene rubbers, carboxylated nitrile rubbers (elastomers) such as carboxylated acrylonitrile rubber can be used. Such carboxylated nitrile rubbers contain chain linkages derived from unsaturated carboxylic acids of the acrylic acid type (unsaturated carboxylic acid monomers). Some representative examples of unsaturated carboxylic acids of the acrylic acid type include acrylic acid, methacrylic acid, sorbic acid, â-acryloxypropanoic acid, ethacrylic acid, 2-ethyl-3-propyl acrylic acid, vinyl acrylic acid, cinnamic acid, maleic acid, fumaric acid and the like. Carboxylated nitrile rubbers generally contain from 0.75 percent to 15 percent by weight chain linkages (repeat units) which are derived from unsaturated carboxylic acid monomers.

The carboxylic nitrile rubbers can be synthesized using any conventional polymerization technique. Emulsion polymerization of carboxylated nitrile elastomers is generally preferred and is used almost exclusively in industrial production. This type of a synthesis generally utilizes a charge composition comprising water, monomers, an initiator and an emulsifier (soap). Such polymerizations can be run over a very wide temperature range from 0°C to as high as 100°C. It is more preferred for these polymerizations to be run at a temperature from 5°C to 60°C.

The amount of carboxylic acid monomer (unsaturated carboxylic acid of the acrylic acid type) incorporated in a carboxylated nitrile rubber may be varied over a wide range. The monomer charge ratio between the carboxylic monomer and the comonomers employed in a polymerization may also be varied over a very wide range. Generally, the charge composition used in the synthesis of carboxylated nitrile rubbers will contain 60 percent to 75 percent by weight butadiene, 15 percent to 40 percent by weight of acrylonitrile and 1 percent to 15 percent by weight methacrylic acid, based upon the total monomer charge. A typical charge composition for a carboxylated nitrile rubber will contain 65 to 69 weight butadiene, 24 to 28 weight percent acrylonitrile and 5 to 9 weight percent methacrylic acid.

The emulsifiers used in the polymerization of such polymers may be charged at the outset of the polymerization or may be added incrementally or by proportioning as the reaction proceeds. Generally, anionic emulsifier systems provide good results; however, any of the general types of anionic, cationic or nonionic emulsifiers may be employed in the polymerization.

Among the anionic emulsifiers that can be employed in emulsion polymerizations are fatty acids and their alkali metal soaps such as caprylic acid, capric acid, pelargonic acid, lauric acid, undecylic acid, myristic acid, palmitic acid, margaric acid, stearic acid, and arachidic acid amine soaps of fatty acids such as those formed from ammonia, mono- and dialkyl amines, substituted hydrazines, guanidine and various low molecular weight diamines; chain-substituted derivatives of fatty acids such as those having alkyl substituents; naphthenic acids and their soaps and the like; sulfuric esters and their salts, such as the tallow alcohol sulfates, coconut alcohol sulfates, fatty alcohol sulfates, such as oleyl sulfate, and sodium lauryl sulfate; sterol sulfates; sulfates of alkylcyclohexanols, sulfation products of lower polymers of ethylene as C₁₀ to C₂₀ straight chain olefins, and other hydrocarbon mixtures, sulfuric esters of aliphatic and aromatic alcohols having intermediate linkages, such as ether, ester or amide groups such as alkylbenzyl (polyethyleneoxy) alcohols, the sodium salt or tridecyl ether sulfate; alkane sulfonates, esters and salts, such as alkylchlorosulfonates with the general formula RSO₂Cl, wherein R is an alkyl group having from 1 to 20 carbon atoms, and alkylsulfonates with the general formula RSO₂-OH, wherein R is an alkyl group having from 1 to 20 carbon atoms; sulfonates with intermediate linkages such as ester and ester-linked sulfonates such as those having the formula RCOOC₂H₄SO₃H and ROOC-CH₂-SO₃H, wherein R is an alkyl group having from 1 to 20 carbon atoms such as dialkyl sulfosuccinates; ester salts with the general formula: 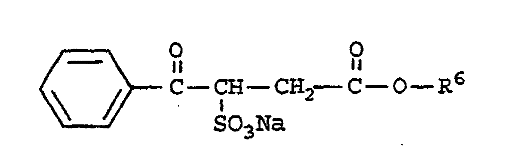 wherein R⁶ is an alkyl group having from 1 to 20 carbon atoms; alkaryl sulfonates in which the alkyl groups contain preferably from 10 to 20 carbon atoms, e.g. dodecylbenzenesulfonates, such as sodium dodecylbenzenesulfonate; alkyl phenol sulfonates; sulfonic acids and their salts such as acids with the formula R⁶SO₃Na, wherein R⁶ is an alkyl; sulfonamides, sulfamido methylenesulfonic acids; rosin acids and their soaps; sulfonated derivatives of rosin and rosin oil; and lignin sulfonates.

Rosin acid soap has been used with good success at a concentration of 5 percent by weight in the initial charge composition used in the synthesis of carboxylated elastomers. Of rosin acids, 90 percent are isomeric with abietic acid and the other 10 percent is a mixture of dehydro abietic acid and dihydro abietic acid.

The polymerization of these carboxylated nitrile rubbers may be initiated using free radical catalysts, ultraviolet light or radiation. To ensure a satisfactory polymerization rate, uniformity and a controllable polymerization, free radical initiators are generally used with good results. Free radical initiators which are commonly used include the various peroxygen compounds such as potassium persulfate, ammonium persulfate, benzoyl peroxide, hydrogen peroxide, di-t-butyl peroxide, dicumyl peroxide, 2,4-dichlorobenzoyl peroxide, decanoyl peroxide, lauroyl peroxide, cumene hydroperoxide, p-menthane hydroperoxide, t-butylhydroperoxide, acetyl acetone peroxide, methyl ethyl ketone peroxide, succinic acid peroxide, dicetyl peroxydicarbonate, t-butyl peroxyacetate, t-butyl peroxymaleic acid, t-butyl peroxybenzoate, and acetyl cyclohexyl sulfonyl peroxide; the various azo compounds such as 2-t-butylazo-2-cyanopropane, dimethyl azodiisobutyrate, azodiisobutyronitrile, 2-t-butylazo-1-cyanocyclohexane, 1-t-amylazo-1-cyanocyclohexane and the like; the various alkyl perketals, such as 2,2-bis-(t-butylperoxy) butane, ethyl 3,3-bis (t-butylperoxy)butyrate, and 1,1-di-(t-butylperoxy)cyclohexane. Cumene hydroperoxide can be used as an initiator to obtain very good results in the polymerization of carboxylated nitrile rubber.

The emulsion polymerization system used in the synthesis of carboxylated nitrile rubbers can be treated at the desired degree of conversion with shortstopping agents, such as hydroquinone. Typical shortstopping agents will not interfere with the action of the succinic acid derivative salts as scorch inhibitors. Typical stabilizing agents and standard antioxidants can also be added to the emulsion of a carboxylated nitrile rubber.

After the emulsion polymerization has been completed, most conventional coagulating techniques for carboxylated nitrile rubbers can be employed. A review of coagulation techniques for nitrile rubbers is presented in Hofmann, Werner "Nitrile Rubber," *Rubber Chemistry and Technology,* vol. 37, no. 2, part 2 (April-June 1964), pp. 94-96. Normally such latexes are coagulated with reagents which ensure the preservation of the carboxyl groups of the elastomers as acidic moieties. Coagulation with acid or blends of salts with acids is usually very satisfactory. For example, sulfuric acid, hydrochloric acid, blends of sodium chloride with sulfuric acid and blends of hydrochloric acids with methanol are very effective as coagulating agents for carboxylated rubber emulsions. Calcium chloride solutions which are free of calcium hydroxide have also been used as coagulants with great success.

After coagulation, washing may be employed to remove excess soap and/or electrolyte from the carboxylated rubber. Sometimes washing is also useful in adjusting the pH of the carboxylated elastomer that has been synthesized. After washing, if it is desired, the elastomer can be dewatered. If it is desirable to do so, the carboxylated rubber can also be dried and baled after dewatering using conventional techniques.

Examples of commercially available carboxylated nitrile rubber are HYCAR® 1072 (Bd/ACN=65/34, with 1 percent carboxylic acid) marketed by BF Goodrich and CHEMIGUM® NX-775 (Bd/ACN-55/26 with 7 percent carboxylic acid) marketed by The Goodyear Tire & Rubber Company. These carboxylated copolymers contain approximately 0.5-10 percent by weight terminal carboxyl groups.

The rubber composition also contains a natural or synthetic diene derived rubber. Representative of the rubbers include medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber, acrylonitrile-butadiene rubber and mixtures thereof. Preferably, the rubber is natural rubber, styrene-butadiene rubber or cis-polybutadiene. This rubber, other than the nitrile rubber, may be used in amounts ranging from 95 to 70 parts by weight based on 100 parts by weight of total rubber. Preferably, this rubber is used in amounts ranging from 95 to 80 parts by weight based on 100 parts by weight of total rubber.

The apex of the tire of the present invention contains from 3 to 20 phr of the reaction product of a cashew nut oil modified novolak-type phenolic resin and methylene donor. Preferably, from 7 to 15 phr of the reaction product is used.

A cashew nut oil modified novolak-type phenolic resin is an essential component in the present invention. Such resins are commercially available from Schenectady Chemicals Inc under the designation SP-6700. The resin is present in an amount ranging from 5 to 15 phr. Preferably, the resin is present in an amount ranging from 6 to 10 phr. The modification rate of oil based on total novolak-type phenolic resin may range from 10 to 50 percent. For production of the novolak-type phenolic resin modified with cashew nut oil, various processes may be used. For example, phenols such as phenol, cresol and resorcin may be reacted with aldehydes such as formaldehyde, paraformaldehyde and benzaldehyde using acid catalysts. Examples of acid catalysts include oxalic acid, hydrochloric acid, sulfuric acid and p-toluenesulfonic acid. After the catalytic reaction, the resin is modified with the oil.

In-situ resins are formed in the carboxylated nitrile rubber stock and involve the reaction of cashew nut oil modified novolak-type phenolic resin and a methylene donor. The term "methylene donor" is intended to mean a compound capable of reacting with the cashew nut oil modified novolak-type phenolic resin and generate the resin in-situ. Examples of methylene donors which are suitable for use in the present invention include hexamethylenetetramine, hexaethoxymethylmelamine, hexamethoxymethylmelamine, lauryloxymethylpyridinium chloride, ethoxymethylpyridinium chloride, trioxan hexamethoxymethylmelamine, the hydroxy groups of which may be esterified or partly esterified, and polymers of formaldehyde such as paraformaldehyde. In addition, the methylene donors may be N-substituted oxymethylmelamines, of the general formula: 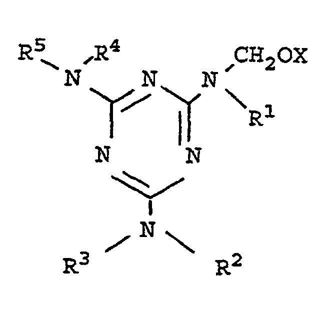 wherein X is hydrogen or an alkyl having from 1 to 8 carbon atoms, R¹ R², R³, R⁴ and R⁵ are individually selected from the group consisting of hydrogen, an alkyl having from 1 to 8 carbon atoms, the group -CH₂OX or their condensation products. Specific methylene donors include hexakis-(methoxymethyl)melamine, N,N',N"-trimethyl/N,N',N"-trimethylolmelamine, hexamethylolmelamine, N,N',N"-dimethylolmelamine, N-methylolmelamine, N,N'-dimethylolmelamine, N,N',N"-tris(methoxymethyl)melamine and N,N'N"-tributyl-N,N',N"-trimethylol-melamine. The N-methylol derivatives of melamine are prepared by known methods.

The amount of methylene donor that is present in the rubber stock may vary. Typically, the amount of methylene donor that is present will range from 1 phr to 5 phr. Preferably, the amount of methylene donor ranges from 2 phr to 5 phr.

Preferably, the weight ratio of cashew nut oil modified novolak-type phenolic resin to methylene donor is 1:1 to 15:1, especically 3:1 to 5:1.

It is readily understood by those having skill in the art that the rubber compositions used in the apex area would be compounded by methods generally known in the rubber compounding art, such as mixing the various sulfur-vulcanizable constituent rubbers with various commonly used additive materials such as, for example, curing aids, such as sulfur, activators, retarders and accelerators, processing additives, such as oils, resins including tackifying resins, silicas, and plasticizers, fillers, pigments, fatty acid, zinc oxide, waxes, antioxidants and antiozonants, peptizing agents and reinforcing materials such as, for example, carbon black. As known to those skilled in the art, depending on the intended use of the sulfur vulcanizable and sulfur vulcanized material (rubbers), the additives mentioned above are selected and commonly used in conventional amounts.

The apex rubber compound may contain various conventional rubber additives. Typical additions of carbon black comprise 20 to 200 parts by weight of diene rubber (phr), preferably 50 to 100 phr.

A number of commercially available carbon blacks may be used. Included in the list of carbon blacks are those known under the ASTM designations N299, S315, N326, N330, M332, N339, N343, N347, N351, N358, N375, N539, N550 and N582. Such processing aids may be present and can include, for example, aromatic, naphthenic, and/or paraffinic processing oils. Typical amounts of tackifying resins, such as phenolic tackifiers, range from 1 to 3 phr. Silica, if used, may be used in an amount of 5 to 25 phr, often with a silica coupling agent. Representative silicas may be, for example, hydrated amorphous silicas. Typical amounts of antioxidants comprise 1 to 5 phr. Representative antioxidants may be, for example, diphenyl-p-phenylenediamine, polymerized 1,2-dihydro-2,2,4-trimethylquinoline and others, such as, for example, those disclosed in the Vanderbilt Rubber Handbook (1990), pages 343-362. Typical amounts of antiozonants comprise 1 to 5 phr. Representative antiozonants may be, for example, those disclosed in the Vanderbilt Rubber Handbook (1990), pages 363-367. Typical amounts of fatty acids, if used, which can include stearic acid comprise 0.5 to 3 phr. Typical amounts of zinc oxide comprise 2 to 10 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide. The presence and relative amounts of the above additives are considered to be not an aspect of the present invention which is more primarily directed to the utilization of the combination of an acrylonitrile rubber and the reaction product of the cashew nut oil modified novolak-type phenolic resin and methylene donor.

The vulcanization is conducted in the presence of a sulfur vulcanizing agent. Examples of suitable sulfur vulcanizing agents include elemental sulfur (free sulfur) or sulfur donating vulcanizing agents, for example, an amine disulfide, polymeric polysulfide or sulfur olefin adducts. Preferably, the sulfur vulcanizing agent is elemental sulfur. As known to those skilled in the art, sulfur vulcanizing agents are used in an amount ranging from 0.5 to 5 phr, or even, in some circumstances, up to 8 phr, with a range of from 1.4 to 4.0 being preferred.

Accelerators are used to control the time and/or temperature required for vulcanization and to improve the properties of the vulcanizate. In one embodiment, a single accelerator system may be used, i.e., primary accelerator. Conventionally, a primary accelerator is used in amounts ranging from 0.5 to 2.5 phr. In another embodiment, combinations of two or more accelerators which is generally used in the larger amount (0.5 to 2.0 phr), and a secondary accelerator which is generally used in smaller amounts (0.05 to 0.50 phr) in order to activate and to improve the properties of the vulcanizate. Combinations of these accelerators have been known to produce a synergistic effect of the final properties and are somewhat better than those produced by use of either accelerator alone. In addition, delayed action accelerators may be used which are not affected by normal processing temperatures but produce satisfactory cures at ordinary vulcanization temperatures. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The tire can be built, shaped, molded and cured by various methods which will be readily apparent to those having skill in such art.

The prepared tire of this invention is conventionally shaped and cured by methods known to those having skill in such art.

The invention may be better understood by reference to the following examples in which the parts and percentages are by weight unless otherwise indicated.

### Example 1

Rubber compositions containing the materials set out in Table I were prepared in a BR Banbury® using a single nonproductive and productive stages of addition. Table II sets out the cure behavior and vulcanizate properties for the Control Compound A and also compounds B-G which contain carboxylated NBR or NBR, cashew nut oil modified novolak-type phenolic resin and a methylene donor.

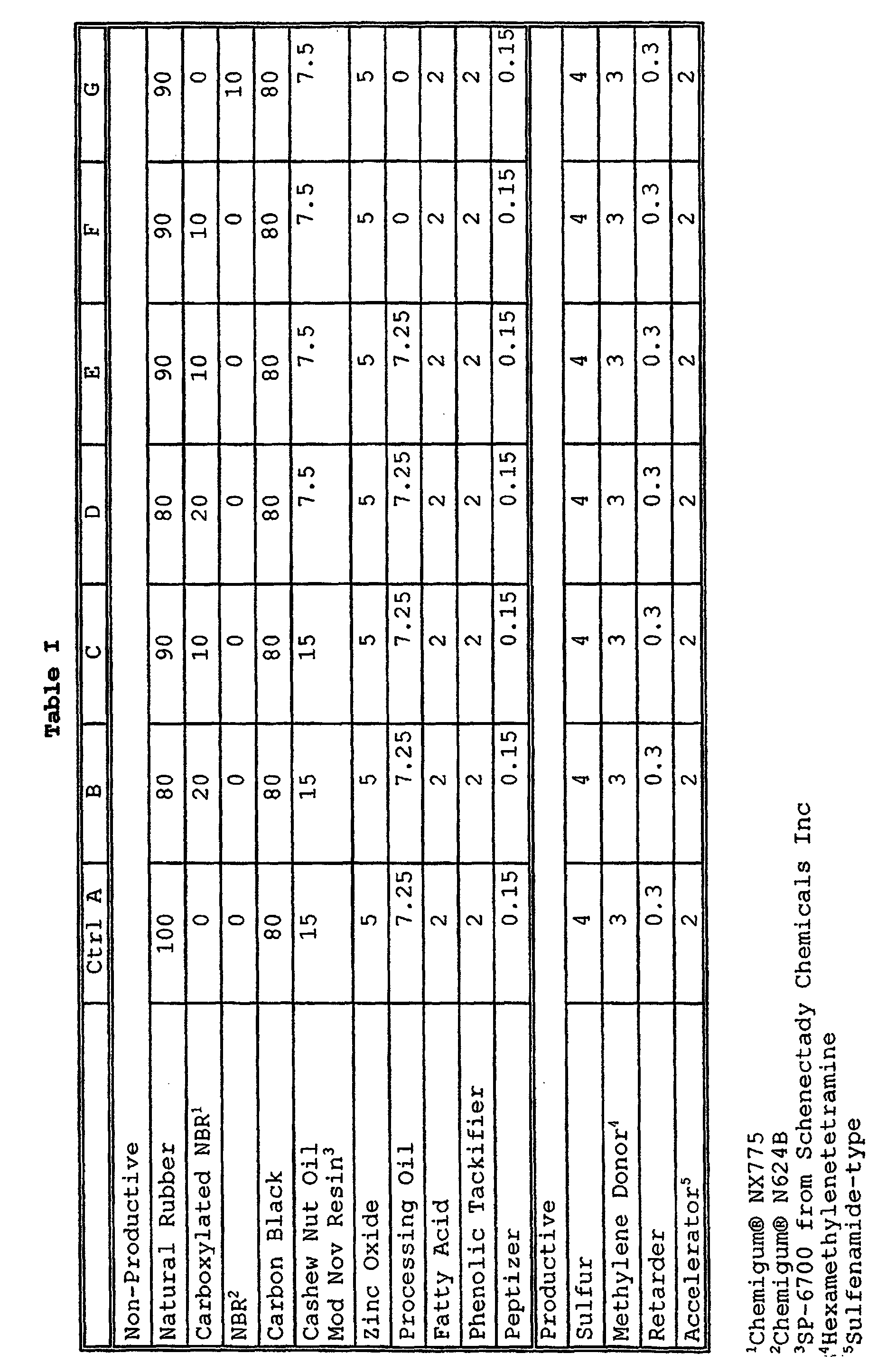

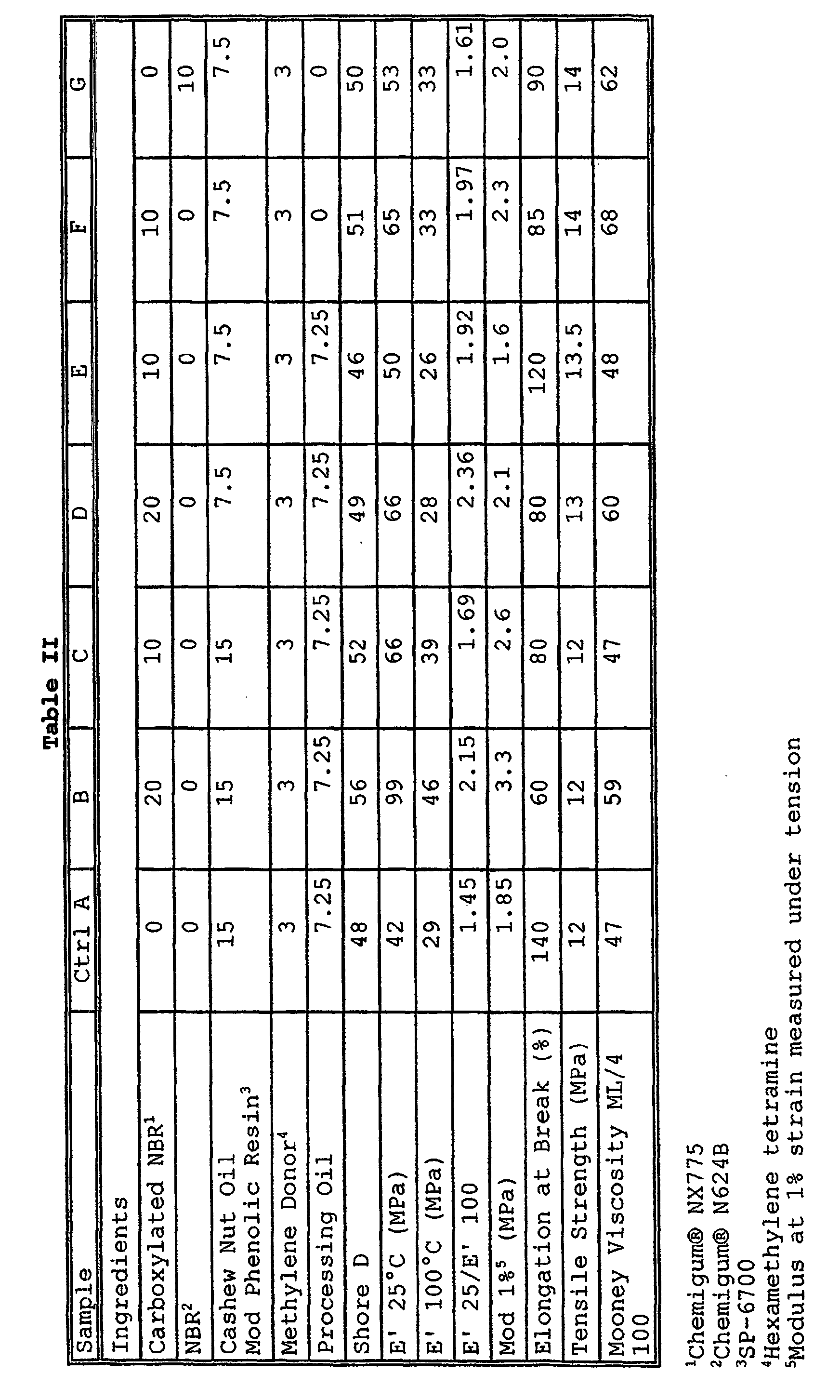

The above data demonstrates some of the desirable properties which are obtained by practicing the present invention.

The E' 25°C and E' 100°C are measured using dynalizer equipment from Barco Industries. The method involved indenting the sample with a spherical 3 mm diameter probe at a depth of 1 mm. The indentation time was 16 milliseconds. The E' is calculated from the registered stress-relaxation curve.

The properties for Samples B and C show an increase in desired stiffness throughout the temperature range of 25°C-100°C. Samples D and E provide the desired stiffness with reduced levels of reinforcing resin. Comparing Samples F and G, one seems similar hardness values with NBR and the carboxylated NBR. NBR offers the advantage of a less temperature dependency of hardness.

## Claims

1. A pneumatic tire having the apex around the carcass ply turnup comprised of sulfur-vulcanized rubber composition **characterized by**, based on 100 parts by weight of rubber (phr),
(a) 5 to 30 parts by weight of an acrylonitrile-diene rubber having an acrylonitrile content ranging from 15 to 45 percent by weight;
(b) 95 to 70 parts by weight of a rubber selected from the group consisting of medium vinyl polybutadiene, styrene-butadiene rubber, synthetic cis-1,4-polyisoprene, synthetic 3,4-polyisoprene, natural rubber, cis-polybutadiene, styrene-isoprene rubber, styrene-isoprene-butadiene rubber and mixtures thereof; and
(c) 3 to 20 phr of the reaction product of
(i) from 2 to 15 phr of a cashew nut oil modified novolak-type phenolic resin; and
(ii) from 1 to 5 phr of a methylene donor selected from the group consisting of hexamethylenetetramine, hexaethoxymethylmelamine, hexamethoxymethylmelamine, lauryloxymethylpyridinium chloride, ethoxymethylpyridinium chloride, trioxan hexamethoxymethylmelamine, the hydroxy groups of which may be esterified or partly esterified and polymers of formaldehyde and N-substituted oxymethyl melamines of the formula: 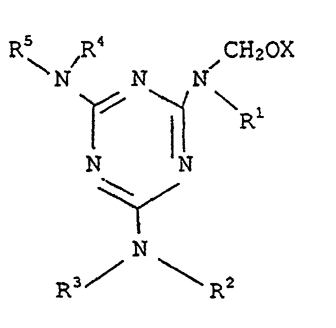
wherein X is selected from the group consisting of hydrogen and an alkyl having from 1 to 8 carbon atoms; and R¹, R², R³, R⁴ and R⁵ are individually selected from the group consisting of hydrogen, an alkyl having from 1 to 8 carbon atoms, the group -CH₂OX and their condensation products.

2. The tire of claim 1 **characterized in that** said acrylonitrile-diene rubber is a carboxylated acrylonitrile rubber.

3. The tire of claim 1 **characterized in that** said acrylonitrile-diene rubber contains from 24 to 35 weight percent of bound acrylonitrile.

4. The tire of claim 1 **characterized in that** the weight ratio of cashew nut oil modified novolak-type phenolic resin to methylene donor ranges from 1:1 to 15:1.

5. The tire of claim 4 **characterized in that** the weight ratio ranges from 3:1 to 5:1.

6. The tire of claim 1 **characterized in that** from 5 to 20 parts by weight of acrylonitrile-diene rubber is present.

7. The tire of claim 2 **characterized in that** said carboxylated acrylonitrile rubber contains from 0.75 to 15 percent by weight chain linkages which are derived from an unsaturated carboxylic acid monomer.

8. The tire of claim 1 **characterized in that** said methylene donor is hexamethylenetetramine.

9. The tire of claim 1 **characterized in that** said acrylonitrile-diene rubber is acrylonitrile-butadiene rubber.

## Patentansprüche

1. Luftreifen mit dem Kemreiter um den Karkasslagen-Hochschlag umfassend eine Schwefel-vulkanisierte Kautschukzusammensetzung, **gekennzeichnet durch**, bezogen auf 100 Gew.-Teile Kautschuk (ThK),
a) 5 bis 30 Gew.-Teile eines Acrylnitril-Dien-Kautschuks mit einem Acrylnitrilgehalt im Bereich von 15 bis 45 Gew.-%,
b) 95 bis 70 Gew.-Teile eines Kautschuks ausgewählt aus der Gruppe bestehend aus Polybutadien mit mittlerem Vinylgehalt, Styrol-Butadien-Kautschuk, synthetischem cis-1,4-Polyisopren, synthetischem 3,4-Polyisopren, Naturkautschuk, cis-Polybutadien, Styrol-lsopren-Kautschuk, Styrol-lsopren-Butadien-Kautschuk und Mischungen davon und
c) 3 bis 20 ThK des Reaktionsproduktes von
(i) 2 bis 15 ThK eines Cashewnussöl-modifizierten Novolak-Phenolharzes und
(ii) 1 bis 5 ThK eines Methylendonors ausgewählt aus der Gruppe bestehend aus Hexamethylentetramin, Hexaethoxymethylmelamin, Hexamethoxymethylmelamin, Lauryloxymethylpyridiniumchlorid, Ethoxymethylpyridiniumchlorid, Trioxanhexamethoxymethylmelamin, deren Hydroxygruppen verestert oder teilweise verestert sein können, und Polymeren von Formaldehyd und N-substituierten Oxymethylmelaminen der Formel: 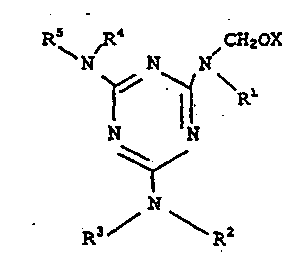
worin X ausgewählt ist aus der Gruppe bestehend aus Wasserstoff und einem Alkyl mit 1 bis 8 Kohlenstoffatomen und R¹, R², R³, R⁴ und R⁵ einzeln ausgewählt sind aus der Gruppe bestehend aus Wasserstoff, einem Alkyl mit 1 bis 8 Kohlenstoffatomen, der Gruppe -CH₂OX und deren Kondensationsprodukten.

2. Reifen nach Anspruch 1, **dadurch gekennzeichnet, dass** der Acrylnitril-Dien-Kautschuk ein carboxylierter Acrylnitrilkautschuk ist.

3. Reifen nach Anspruch 1, **dadurch gekennzeichnet, dass** der Acrylnitril-Dien-Kautschuk 24 bis 35 Gew.-% gebundenes Acrylnitril enthält.

4. Reifen nach Anspruch 1, **dadurch gekennzeichnet, dass** das Gewichtsverhältnis von Cashewnussöl-modifiziertem Novolak-Phenolharz zu Methylendonor im Bereich von 1:1 bis 15:1 liegt.

5. Reifen nach Anspruch 4, **dadurch gekennzeichnet, dass** das Gewichtsverhältnis im Bereich von 3:1 bis 5:1 liegt.

6. Reifen nach Anspruch 1, **dadurch gekennzeichnet, dass** 5 bis 20 Gew.-Teile Acrylnitril-Dien-Kautschuk vorhanden sind.

7. Reifen nach Anspruch 2, **dadurch gekennzeichnet, dass** der carboxylierte Acrylnitrilkautschuk 0,75 bis 15 Gew.-% Kettenverknüpfungen enthält, die von einem ungesättigten Carbonsäure-Monomer abgeleitet sind.

8. Reifen nach Anspruch 1, **dadurch gekennzeichnet, dass** der Methylendonor Hexamethylentetramin ist.

9. Reifen nach Anspruch 1, **dadurch gekennzeichnet, dass** der Acrylnitril-Dien-Kautschuk Acrylnitril-Butadien-Kautschuk ist.

## Revendications

1. Bandage pneumatique dont le bourrage sur tringle, autour du retournement vers le haut de la nappe de carcasse, comprend une composition de caoutchouc vulcanisé au soufre **caractérisé par**, basé sur cent parties en poids de caoutchouc (phr),
(a) à concurrence de 5 à 30 parties en poids, un caoutchouc d'acrylonitrile-diène possédant une teneur en acrylonitrile qui se situe dans la plage de 15 à 45 % en poids ;
(b) à concurrence de 95 à 70 parties en poids, un caoutchouc choisi parmi le groupe constitué par du caoutchouc de polybutadiène à teneur vinylique moyenne, du caoutchouc de styrène-butadiène, du caoutchouc de cis-1,4-polyisoprène synthétique, du caoutchouc de 3,4-polyisoprène synthétique, du caoutchouc naturel, du caoutchouc de cis-polybutadiène, du caoutchouc de styrène-isoprène, du caoutchouc de styrène-isoprène-butadiène et leurs mélanges ; et
(c) à concurrence de 3 à 20 phr, le produit réactionnel de
(i) à concurrence de 2 à 15 phr, une résine phénolique de type novolaque modifiée avec de l'huile de noix de cajou; et
(ii) à concurrence de 1 à 5 phr, un donneur de groupes méthylène choisi parmi le groupe constitué par l'hexaméthylènetétramine, l'hexaméthoxyméthylmélamine, l'hexaméthoxy-méthylmélamine, le chlorure de lauryloxy-méthylpyridinium, le chlorure d'éthoxyméthyl-pyridinium, l'hexaméthoxyméthylmélamin de trioxanne dont les groupes hydroxyle peuvent être estérifiés ou partiellement estérifiés à titre de polymères de formaldéhyde et d'oxyméthylmélamines substituées sur l'atome d'azote répondant à la forme générale: 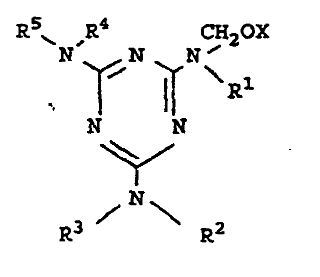
dans laquelle X est choisi parmi le groupe constitué par un atome d'hydrogène et par un groupe alkyle contenant de 1 à 8 atomes de carbone; et R¹, R², R³, R⁴ et R⁵ sont choisis, indépendamment l'un de l'autre, parmi le groupe constitué par un atome d'hydrogène, par un groupe alkyle contenant de 1 à 8 atomes de carbone, par le groupe -CH₂OX ou par leurs produits de condensation.

2. Bandage pneumatique selon la revendication 1, **caractérisé en ce que** ledit caoutchouc d'acrylonitrilediène est un caoutchouc d'acrylonitrile carboxylé.

3. Bandage pneumatique selon la revendication 1, **caractérisé en ce que** ledit caoutchouc d'acrylonitrilediène contient de l'acrylonitrile à l'état lié à concurrence de 24 à 35 %.

4. Bandage pneumatique selon la revendication 1, **caractérisé en ce que** le rapport pondéral de la résine phénolique de type novolaque modifiée avec de l'huile de noix de cajou au donneur de groupes méthylène se situe dans la plage de 1 : 1 à 15 : 1.

5. Bandage pneumatique selon la revendication 1, **caractérisé en ce que** le rapport pondéral se situe dans la plage de 3 : 1 à 5 : 1.

6. Bandage pneumatique selon la revendication 1, **caractérisé en ce que** le caoutchouc d'acrylonitrilediène est présent à concurrence de 5 à 20 parties en poids.

7. Bandage pneumatique selon la revendication 2, **caractérisé en ce que** ledit caoutchouc d'acrylonitrile carboxylé contient des chaînons, à concurrence de 0,75 à 15 % en poids, qui dérivent d'un monomère d'acides carboxyliques insaturés.

8. Bandage pneumatique selon la revendication 1, **caractérisé en ce que** ledit donneur de groupes méthylène est l'hexaméthylènetétramine.

9. Bandage pneumatique selon la revendication 1, **caractérisé en ce que** ledit caoutchouc d'acrylonitrilediène est un caoutchouc d'acrylonitrile-butadiène.
